# EUROPEAN PATENT APPLICATION

(11) **EP 4 741 976 A1**
(43) Date of publication of application: **13.05.2026**
(21) Application number: 23944186.8
(22) Date of filing: 05.11.2023
(51) Int. Cl.: G05D 1/43

(54) **AUTONOMOUS OPERATING DEVICE AND CROSS-REGION CONTROL METHOD THEREFOR**

(30) Priority: 05.07.2023 CN 202310820787
(71) Applicant: Zhejiang Sunseeker Industrial Co., Ltd., Jinhua, Zhejiang 321000 (CN)
(72) Inventor: ZHOU, Chang, Jinhua, Zhejiang 321000 (CN); LONG, Kai, Jinhua, Zhejiang 321000 (CN)
(74) Representative: Manna, Sara
(86) International application number: PCT/CN2023/129827
(87) International publication number: WO 2025/007465

(57) **Abstract**

Disclosed in the present disclosure are an autonomous operation device and a cross-region control method therefor. The cross-region control method includes: determining, during operation of an autonomous operation device in a current working region, whether a cross-region condition is satisfied; if the cross-region condition is satisfied, controlling the autonomous operation device to search for a pre-arranged cross-region indicator in the current working region; and after the autonomous operation device finds the cross-region indicator, controlling the autonomous operation device to move to a target working region according to a traveling direction indicated by the cross-region indicator. The current working region is spaced apart from the target working region by a non-working region. The autonomous operation device according to the present disclosure can autonomously and accurately complete a cross-region operation, thereby greatly improving the applicability.

## Description

The present disclosure claims priority to the following patent application, the content of which is incorporated herein by reference in its entirety: Chinese Patent Application No. 2023108207875 filed with China National Intellectual Property Administration on July 5, 2023, and entitled "AUTONOMOUS OPERATION DEVICE AND CROSS-REGION CONTROL METHOD THEREFOR".

### TECHNICAL FIELD

The present disclosure relates to the field of robots, and in particular, to an autonomous operation device and a cross-region control method therefor.

### BACKGROUND

An autonomous operation device is, in particular, a robot that can autonomously move in a preset region and perform a specific operation, typically such as an intelligent sweeper/vacuum cleaner performing a cleaning operation, or an intelligent robotic mower performing a lawn mowing operation. Generally, such an autonomous operation device is small in size and is integrated with a sensing apparatus, a driving apparatus, a battery, and the like, which does not need to be manually controlled, and can travel and work in a specified region. Additionally, when the battery power is insufficient, it can autonomously return to the charging station, dock with the charging station and be charged, and continue to travel and work after the charging is completed. For an existing intelligent robotic mower, the working region is a relatively large lawn, and the boundary may be recognized by a camera or configured as a closed electrified wire electrically connected to a boundary signal generation apparatus of the intelligent robotic mower. After reaching the boundary, the intelligent robotic mower generally adopts a random steering or a mode of first reversing and then randomly steering, such that it can return to the inside of the boundary to continue mowing. However, for some lawns separated by roads, the existing intelligent robotic mower cannot autonomously enter the lawn on the other side of the road to work after completing the work on the lawn on one side of the road.

### SUMMARY

The objective of the present disclosure is to provide an improved autonomous operation device and a cross-region control method therefor, which addresses at least one of the above problems.

According to a first aspect of the present disclosure, the objective is at least partially achieved by a cross-region control method for an autonomous operation device. The cross-region control method includes: determining, during operation of an autonomous operation device in a current working region, whether a cross-region condition is satisfied; if the cross-region condition is satisfied, controlling the autonomous operation device to search for a pre-arranged cross-region indicator in the current working region; and after the autonomous operation device finds the cross-region indicator, controlling the autonomous operation device to travel in a straight line along a traveling direction indicated by the cross-region indicator until the autonomous operation device enters a target working region, where the current working region is spaced apart from the target working region by a non-working region. Therefore, in the cross-region control method with the above characteristics, between traveling out of the current region and entering the target region, the autonomous operation device only undergoes straight-line traveling control without monitoring and adjusting the traveling direction, which greatly reduces the computing power required by its control system, thereby eliminating the need for expensive chips and lowering the device cost. Meanwhile, through the cross-region control method, the autonomous operation device can accurately complete the cross-region operation, thereby greatly improving the applicability.

According to a second aspect of the present disclosure, the objective is at least partially achieved by an autonomous operation device. The autonomous operation device includes a processor and a memory. The memory stores a computer program executable on the processor. The processor, when executing the computer program, can implement a step of the cross-region control method for an autonomous operation device as described above.

The details of at least one embodiment will be set forth in the accompanying drawings and the description below. Other features, objectives, and advantages will be apparent from the description, the accompanying drawings, and the claims.

### BRIEF DESCRIPTION OF THE DRAWINGS

FIG. 1 is a schematic diagram of an autonomous operation device according to the present disclosure;
FIG. 2 is a flowchart of a cross-region control method for an autonomous operation device according to a first embodiment of the present disclosure;
FIG. 3 is a schematic diagram of a tag arrangement of the cross-region control method for an autonomous operation device according to a first embodiment of the present disclosure;
FIG. 4 is a schematic diagram of a tag arrangement of a cross-region control method for an autonomous operation device according to a second embodiment of the present disclosure;
FIG. 5 is a schematic diagram of a cross-region indicator arrangement of a cross-region control method for an autonomous operation device according to a third embodiment of the present disclosure; and
FIG. 6 is a schematic diagram of adjustment based on a direction of an arrow pattern of a cross-region control method for an autonomous operation device according to a third embodiment of the present disclosure.

### DETAILED DESCRIPTION

Preferred embodiments of the present disclosure will be described in detail below with reference to the accompanying drawings, such that the objectives, features, and advantages of the present disclosure can be understood more clearly. It should be understood that the embodiments shown in the accompanying drawings are not intended to limit the scope of the present disclosure, but are merely intended to illustrate the essential spirit of the technical solution of the present disclosure.

In the following description, for the purposes of explanation, some specific details are set forth in order to provide a thorough understanding of the various disclosed embodiments. However, those skilled in the related art will recognize that an embodiment can be practiced without one or more of the specific details. In other instances, well-known apparatuses, structures, and techniques associated with the present disclosure may not be shown or described in detail to avoid unnecessarily obscuring the description of the embodiments.

Throughout this specification, reference to "one embodiment" or "an embodiment" means that a particular feature, structure, or characteristic described with reference to an embodiment is included in at least one embodiment. Thus, appearances of the phrase "in one embodiment" or "in an embodiment" at various positions throughout this specification do not necessarily all refer to the same embodiment. In addition, the particular feature, structure, or characteristic may be combined in any manner in one or more embodiments.

For the purpose of clearly illustrating a structure and an operation mode of the present disclosure, various directional terms are used in the following description, but the terms "front", "rear", "left", "right", "outer", "inner", "outward", "inward", "upper", "lower", and the like should be interpreted as convenient expressions and should not be interpreted as limiting terms.

It should be understood that in the description of the specific embodiments of the present disclosure, the terms "first", "second", and the like are used for descriptive purposes only and are not to be construed as indicating or implying relative importance or to implicitly indicate the number of technical features indicated. Therefore, features defined with "first" or "second" may explicitly or implicitly include one or more of the features.

In the specific embodiments of the present disclosure, unless otherwise explicitly stated or defined, the terms "interconnect", "connect", and the like shall be construed broadly. For example, "connect" may be "fixedly connect", "movably connect", "detachably connect", or "integrally connect"; "directly interconnect" or "indirectly interconnect through an intermediate"; or "the communication between the interiors of two elements" or "an interaction between two elements". For those of ordinary skill in the art, the specific meanings of the above terms in the present disclosure can be construed according to specific situations.

Unless otherwise explicitly specified or defined in the specific embodiments of the present disclosure, the recitation of a first feature "on" or "under" a second feature may include the recitation of the first and second features being in direct contact, and may also include the recitation that the first and second features are not in direct contact, but are in contact via another feature therebetween.

Unless otherwise explicitly specified or defined in the specific embodiments of the present disclosure, the term "a plurality of" means two or more.

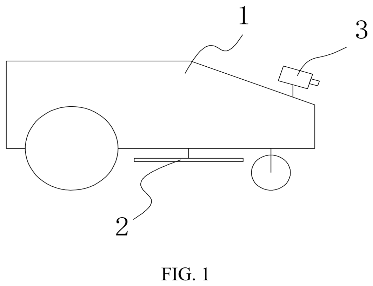

As shown in FIG. 1, this embodiment provides an autonomous operation device. The autonomous operation device is, in particular, a robot that can autonomously move in a preset region and perform a specific operation, typically such as an intelligent sweeper/vacuum cleaner performing a cleaning operation, or an intelligent robotic mower performing a lawn mowing operation. The specific operation particularly refers to an operation for processing a work surface and changing the state of the work surface. The present disclosure is described in detail by taking an intelligent robotic mower as an example. The autonomous operation device can autonomously travel on the surface of a working region, and in particular, as an intelligent robotic mower, can autonomously perform a lawn mowing operation on the ground. The autonomous operation device at least includes a main body mechanism 1, a moving mechanism, a working mechanism, an energy module, a detection module, an interaction module, a control module, and the like.

The main body mechanism generally includes a chassis and a housing. The chassis is configured to mount and accommodate functional mechanisms and functional modules, such as the moving mechanism, the working mechanism, the energy module, the detection module, the interaction module, and the control module. The housing is generally configured to at least partially cover the chassis, primarily to enhance the aesthetics and recognizability of the autonomous operation device. In this embodiment, the housing is configured to be capable of resettable translation and/or rotation relative to the chassis under an external force. In cooperation with a suitable detection module, such as a Hall sensor, the housing can further serve to detect events like collisions and lifting.

The moving mechanism is configured to support the main body mechanism on the ground and drive the main body mechanism to move on the ground, and generally includes a wheeled moving mechanism, a tracked or semi-tracked moving mechanism, a walking moving mechanism, or the like. In this embodiment, the moving mechanism is a wheeled moving mechanism, which includes at least one driving wheel and at least one walking prime mover. The walking prime mover is preferably a motor, and in other embodiments, the walking prime mover may be an internal combustion engine or a machine that uses other types of energy sources to generate power. In this embodiment, a left driving wheel, a left walking prime mover that drives the left driving wheel, a right driving wheel, and a right walking prime mover that drives the right driving wheel are preferably provided. In this embodiment, the linear travel of the autonomous operation device is achieved by the rotation of the left and right driving wheels at the same speed in the same direction, and the steering travel is achieved by the rotation of the left and right driving wheels in the same direction at different speeds or in opposite directions. In other embodiments, the moving mechanism may further include a steering mechanism independent of the driving wheels and a steering prime mover independent of the walking prime mover. In this embodiment, the moving mechanism further includes at least one driven wheel, typically configured as a universal wheel, and the driving wheel and the driven wheel are respectively located at the front and rear ends of the autonomous operation device.

The working mechanism is configured for performing a specific operation task and includes a working member and a working prime mover that drives the working member to operate. Exemplarily, for an intelligent sweeper/vacuum cleaner, the working member includes a roller brush, a dust suction pipe, a dust collection chamber, and the like. For an intelligent robotic mower, the working member includes a cutting blade or a cutting deck 2, and further includes other components for optimizing or adjusting a mowing effect, such as a height adjustment mechanism for adjusting a mowing height. The working prime mover is preferably a motor, and in other embodiments, the working prime mover may be an internal combustion engine or a machine that uses other types of energy sources to generate power. In some other embodiments, the working prime mover and the walking prime mover are configured as the same prime mover.

The energy module is configured to provide energy for various work of the autonomous operation device. In this embodiment, the energy module includes a battery pack and a charging connection structure, where the battery pack is preferably a rechargeable battery pack; the charging connection structure is preferably a charging electrode that may be exposed outside the autonomous operation device.

The detection module is configured as at least one sensor that senses an environmental parameter or a working parameter of the autonomous operation device. Typically, the detection module may include sensors related to the definition of the working region, such as magnetic induction, collision, ultrasonic, infrared, radio, and the like. The types of sensors are adapted to the position and number of the corresponding signal generation apparatuses. The detection module may further include positioning navigation-related sensors such as GPS positioning apparatuses, laser positioning apparatuses, electronic compasses, acceleration sensors, odometers, angle sensors, and geomagnetic sensors. The detection module may further include sensors related to its own working safety, such as an obstacle sensor, a lifting sensor, and a battery pack temperature sensor. The detection module may further include sensors related to an external environment, such as an ambient temperature sensor, an ambient humidity sensor, a light sensor, and a rain sensor. For the intelligent robotic mower, the detection module may further include a camera 3, and a boundary, an obstacle, a path marker, and the like may be recognized by the camera 3.

The interaction module is configured at least to receive control instruction information inputted by a user, transmit information requiring user perception, and communicate with other systems or devices to transmit and receive information. In this embodiment, the interaction module includes an input apparatus arranged on the autonomous operation device for receiving control instruction information inputted by a user, typically such as a control panel and an emergency stop key. The interaction module further includes a display screen, an indicator light, and/or a buzzer arranged on the autonomous operation device, enabling a user to perceive information through light or sound. In other embodiments, the interaction module includes a communication module arranged on the autonomous operation device and a terminal device independent from the autonomous operation device, such as a mobile phone, a computer, or a network server. User control instruction information or other information may be inputted on the terminal device and reach the autonomous operation device via a wired or wireless communication module.

The control module may also be referred to as a control board, a circuit board, a main board, or the like, and generally includes at least one processor and at least one non-volatile memory. The memory stores a pre-written computer program or an instruction set, and the processor, based on the computer program or the instruction set, controls the performance of movements, work, and the like of the autonomous operation device. Further, the control module can also control and adjust the corresponding actions of the autonomous operation device and modify parameters in the memory based on a signal of the detection module and/or a user control instruction.

The boundary is configured to define the working region of the robotic system and generally includes an outer boundary and an inner boundary. The robot is restricted to moving and working within the outer boundary, outside the inner boundary, or between the outer boundary and the inner boundary. The boundary may be solid, typically such as a wall, a fence, or a railing, or may be configured as a closed electrified wire electrically connected to a boundary signal generation apparatus, which is generally arranged in a docking station; the boundary may also be virtual, typically such as a virtual boundary set in an electronic map, for example, formed by two-dimensional or three-dimensional coordinates, for a robot provided with a positioning apparatus (such as a GPS). The boundary may also be a visual boundary line that can be recognized by the camera 3. Specifically, the image photographed by the camera 3 is processed, and the boundary line between the grass and the non-grass is taken as the boundary.

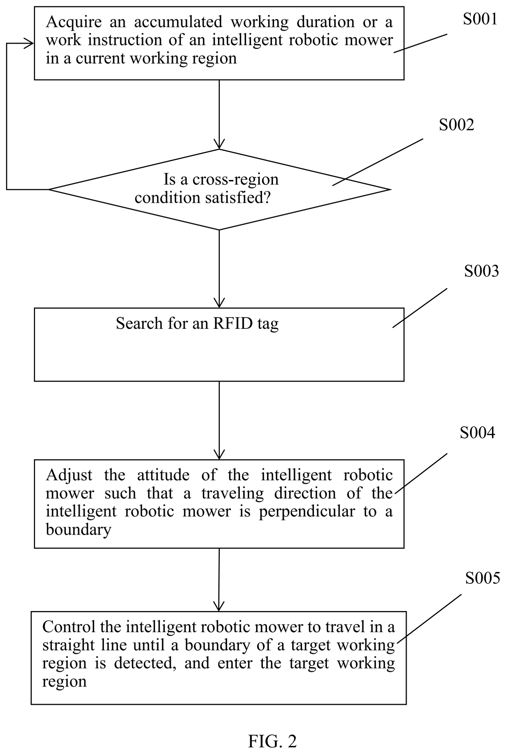

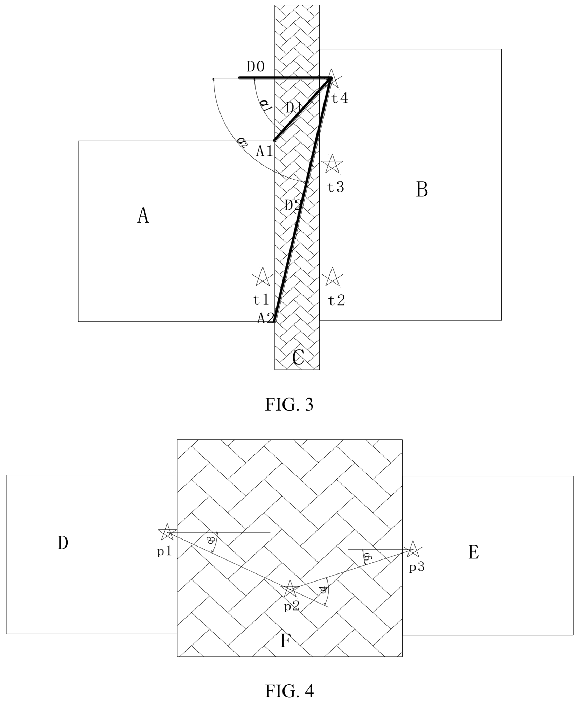

Referring to FIGs. 1 to 3, in this embodiment, the intelligent robotic mower includes a main body mechanism 1 and a camera 3 mounted at a front end of the main body mechanism 1. A built-in control module of the intelligent robotic mower recognizes the boundary line between the grass and the non-grass based on the image photographed by the camera 3, and then determines the boundary of the working region. The non-grass may generally be a region with a significant color difference from the grass, such as a paved ground or bare land. In some embodiments, the boundary is provided with a boundary line or a boundary marker, and the intelligent robotic mower may determine that the boundary is reached by sensing that the intelligent robotic mower travels to the boundary line or near the boundary marker. Specifically, for example, a closed electrified wire is laid along the boundary, and a boundary line sensor is arranged on the intelligent robotic mower. FIG. 3 shows the distribution of working regions A and B. The working regions A and B are separated by a non-working region C. In this embodiment, the working regions A and B may generally be grass, and the non-working region may generally be a paved road. A signal receiver is arranged on the intelligent robotic mower, and a signal transmitter may be arranged in advance near a boundary where it is desired that the intelligent robotic mower travel out of the current working region. In this embodiment, the signal receiver is, for example, an RFID reader (not shown), and correspondingly, the signal transmitter is an RFID tag, such as RFID tags t1, t2, t3, and t4 shown in FIG. 3. The RFID tag may be fixed below the ground surface by burying, or may be directly fixed on the ground surface. In other embodiments, the signal receiver and the signal transmitter may also adopt other forms, and preferably, the signal transmitter is a passive signal transmitter. The following uses an RFID tag as an example for description. The RFID tag has a unique identification code and can be associated with an indicated direction. When the RFID reader detects the RFID tag, the intelligent robotic mower may know which direction to travel in. The position of the RFID tag may be set by the user according to the actual situation of the user's own grass, as long as it can be ensured that the robot can reach a target working region by traveling in a straight line after traveling out of the current working region at the position of the RFID tag. For example, in the embodiment shown in FIG. 3, the intelligent robotic mower travels out of the working region A from the RFID tag t1, and then travels in a straight line until it detects the boundary of the working region B and enters the working region B. The number of RFID tags in each working region may be 1, 2, 3, or more. The indicated direction of each RFID tag may be set according to actual needs. The indicated direction of the RFID tag may be perpendicular to the boundary (referring to FIG. 3) or form an acute included angle (referring to FIG. 4).

Therefore, the RFID tag-based cross-region control method for an intelligent robotic mower may include the following steps.

In S001, an intelligent robotic mower works in a working region A (also referred to as a current working region), and an accumulated working duration or a work instruction of the intelligent robotic mower in the current working region is acquired. The accumulated working duration refers to a working duration in the current working region A, whether interrupted or uninterrupted. When the intelligent robotic mower initially enters the working region to work, the accumulated working duration starts to be measured. When the intelligent robotic mower leaves the working region, the accumulated working duration is paused or reset. Charging of the intelligent robotic mower, reaching a daily disabled time, and the like may cause work interruption. The work instruction indicates whether cross-region working, cross-region charging, docking, or the like is required.

In S002, it is determined whether a cross-region condition is satisfied. If so, S003 is performed; otherwise, S001 is performed. The cross-region condition generally means that the accumulated working duration of a current working region reaches a preset value, or that a specified cross-region working time (e.g., a specific time point) is reached. The preset value may be set based on the actual lawn size and the battery capacity.

In S003, an RFID tag is searched for. In some embodiments, in the process of searching for the RFID tag by the intelligent robotic mower, the cutting mechanism may keep working or stop working. In some embodiments, in the process of searching for the RFID tag, the intelligent robotic mower continues to travel within the working region A until the RFID tag t1 is sensed. During traveling, the cutting mechanism generally keeps working to trim the lawn along the way. In some embodiments, in the process of searching for the RFID tag, the intelligent robotic mower first searches for the boundary and travels along the boundary until the RFID tag is sensed, which enables higher efficiency. During traveling, the cutting mechanism generally stops working to avoid damage to the cutting mechanism.

In S004, it is determined that the intelligent robotic mower has traveled to the position where the RFID tag t1 is located, and the traveling direction of the intelligent robotic mower is adjusted to be consistent with an indicated direction. In an embodiment, the traveling direction of the intelligent robotic mower is adjusted to be perpendicular to the boundary. The signal strength received by the RFID reader may be used to estimate the distance between the RFID tag and the RFID reader. Therefore, the signal strength received by the RFID reader on the intelligent robotic mower may be used as an indicator to determine whether the intelligent robotic mower reaches the position of the RFID tag. In this embodiment, the camera 3 of the intelligent robotic mower is used to capture image information within a range of about 50 cm in front of the intelligent robotic mower. In the captured image information, if a boundary is present, an included angle between the boundary and a horizontal reference line is determined. If the included angle is 0°, it is determined that the traveling direction of the robot is perpendicular to the boundary, and it can be determined whether the robot is oriented toward the inside of the boundary or toward the outside of the boundary.

In S005, the intelligent robotic mower is controlled to travel in a straight line, that is, to travel along an indicated direction of the RFID tag t1, until the boundary of the working region B (i.e., the target working region) is detected, and enter the working region B to start working, thereby completing the cross-region behavior.

In some embodiments, after the intelligent robotic mower travels to the RFID tag t1 along the boundary, the intelligent robotic mower travels out of the working region A in a straight line after rotating by a fixed angle. Since a boundary extension direction is generally perpendicular to a cross-region traveling direction, the fixed angle is generally about 90°.

In some embodiments, since the intelligent robotic mower usually starts working from one side of the working region and ends at the other side of the working region, the RFID tag t1 is generally arranged near the working region where the intelligent robotic mower ends its work, to save the time required for the intelligent robotic mower to find the RFID tag t1 and improve the cross-region efficiency.

In some embodiments, the intelligent robotic mower may travel out of the working region at a section of the boundary of the working region B, for example, to return to the working region A for charging or docking. Therefore, the user may further arrange at least one RFID tag near the section of the boundary, such as RFID tags t2 and t3 shown in the working region B in FIG. 3, to improve the efficiency of finding the RFID tag, thereby enabling rapid travel out of the working region B.

In some embodiments, the RFID tag should not or cannot be arranged at a boundary corresponding to an adjacent region, such as RFID tag t4 in FIG. 3. If the intelligent robotic mower travels out of the working region B from the RFID tag t4 along a direction perpendicular to the boundary and travels in a straight line, the intelligent robotic mower cannot reach the working region A. To address this problem, the unique identification code contained in the RFID tag t4 may be used to associate the corresponding direction. Specifically, a reference direction D0 of the intelligent robotic mower, an included angle α1 between the first direction D1 and the reference direction D0, and an included angle α2 between the second direction D2 and the reference direction D0 are determined. The reference direction D0 is the direction perpendicular to the boundary and pointing away from the working region B from the RFID tag t4, the first direction D1 is the direction of a connecting line from the RFID tag t4 to a first feature point A1 on the boundary of the working region A, and the second direction D2 is the direction of a connecting line from the RFID tag t4 to a second feature point A2 on the boundary of the working region A. A section of the boundary of the working region A, between the first feature point A1 and the second feature point A2, is a boundary that permits entry into the working region A. The intelligent robotic mower is configured such that when leaving the working region B and traveling toward the working region A, if the intelligent robotic mower starts from the RFID tag t4, it first adjusts its attitude such that the traveling direction is perpendicular to the boundary of the RFID tag t4 and oriented toward the outside of the boundary, and then rotates in place by an angle β and travels in a straight line, where α1 ≤ β ≤ α2. As a special case, if only the first feature point A1 permits the entry into the working region A, then β = α1. That is, the traveling direction indicated by the RFID tag t4 is the direction indicated by the angle β.

In some embodiments, the reference direction may be determined by the camera 3. In some embodiments, the reference direction is a geomagnetic north or south direction. In this case, a geomagnetic sensor that is capable of detecting the geomagnetic direction is provided in the intelligent robotic mower.

In some embodiments, the user desires that the intelligent robotic mower travel along a tortuous path when crossing regions. Exemplarily, as shown in FIG. 4, the user desires that the intelligent robotic mower travel out of a working region D from a point β1 on the boundary of the working region D, pass through a point p2 in a non-working region F, and enter a region E from a point p3 on the boundary of the working region E. In this case, the above cross-region path can be implemented as long as the user buries corresponding RFID tags at points p1, p2, and p3.

Specifically, the intelligent robotic mower is configured such that when being about to leave the working region D and enter the non-working region F, if the intelligent robotic mower starts from the point p1, it first adjusts its attitude such that the traveling direction is perpendicular to the boundary at the point p1 and oriented toward the outside of the boundary, then rotates in place by an angle α3 and travels in a straight line until the RFID tag at the point p2 is detected, and then rotates in place by an angle α4 and travels in a straight line until the intelligent robotic mower enters the working region E. When the intelligent robotic mower is about to travel from the working region E to the working region D, it starts from the point p3, and first adjusts its attitude such that the traveling direction is perpendicular to the boundary at the point p3 and oriented toward the outside of the boundary, then rotates in place by an angle α5 and travels in a straight line until the RFID tag at the point p2 is detected, and then rotates in place by an angle -α4 and travels in a straight line until the intelligent robotic mower enters the working region D. Here, the in-place rotation by angle α refers to rotation in a first direction, and the in-place rotation by angle -α refers to rotation in a second direction, where the first direction is opposite to the second direction.

That is, at the point p2, the intelligent robotic mower selects the rotation direction based on the detected indication information of the previous tag. Specifically, in these embodiments, if the previous tag is the RFID tag at the point p1, the intelligent robotic mower rotates counterclockwise by α4; if the previous tag is the RFID tag at the point p3, the intelligent robotic mower rotates clockwise by α4.

It should be understood that in the non-working region F, the RFID tag may also be arranged at a plurality of points, and these points are connected in sequence to form a cross-region traveling path of the intelligent robotic mower.

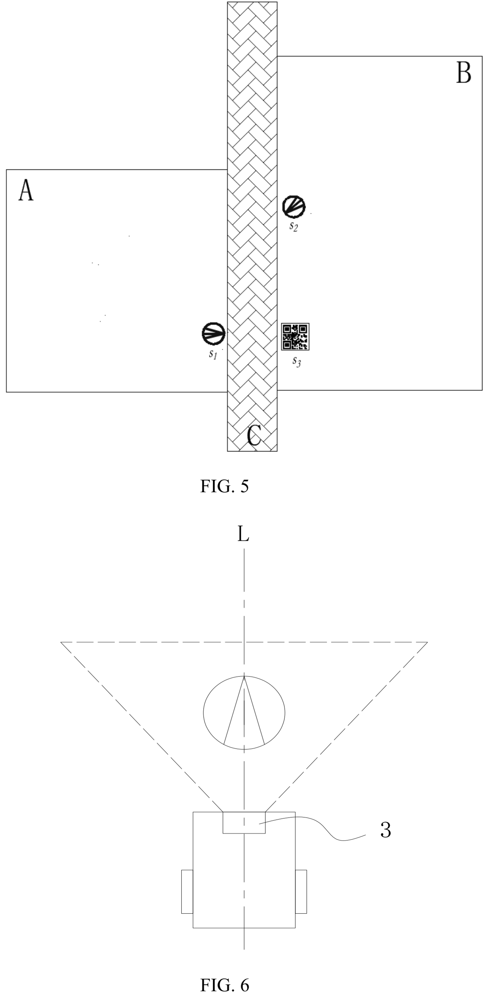

In some embodiments, the RFID tag may also be replaced with a cross-region indicator with an indicated direction in other forms. For example, the image marker may include at least one of arrow icons S1 and S2 and a QR code icon S3. As shown in FIG. 5, generally, the arrow icons S1 and S2 and the QR code icon S3 are tiled along the edge of the grass, i.e., near the boundary, and can be recognized by the camera 3. That is, the intelligent robotic mower recognizes, via the camera 3, the indicated directions contained in the arrow icons S1 and S2 and the QR code icon S3, and then travels along the indicated directions to complete the cross-region operation. Since the arrow icons S1 and S2 and the QR code icon S3 can be recognized by the camera 3, there is no need to add an RFID reader, which reduces the cost of the intelligent robotic mower.

Specifically, for the QR code icon S3, the rotation angle and direction information in the QR code icon S3 can be parsed through recognition by the camera 3. The intelligent robotic mower may perform the cross-region operation by rotating according to the angle and direction indicated by the QR code based on the reference direction. For the arrow icons S1 and S2, the traveling direction (central axis L) of the intelligent robotic mower is controlled to coincide with the direction of an arrow indicating line, as exemplarily shown in FIG. 6. The intelligent robotic mower stores a standard picture of an arrow icon (i.e., a picture in which the central axis L of the intelligent robotic mower coincides with the arrow indicating line). When the intelligent robotic mower searches for arrow icons, if the camera 3 captures an arrow icon, the captured arrow icon is compared with the arrow icon in the standard picture to determine an included angle γ between the current traveling direction of the intelligent robotic mower and the arrow indicating line of the arrow icon. The intelligent robotic mower is controlled to travel to the arrow icon in a straight line and rotate in place by angle γ, such that the traveling direction of the intelligent robotic mower substantially coincides with the arrow indicating line of the arrow icon.

In some embodiments, the arrow icons S1 and S2 may be formed by plants different from the lawn, such as flowers, grasses, or trees of different colors, which can prevent the arrow icons from affecting the aesthetics of the lawn and also enhance the landscape effect.

Although both the arrow icons S 1 and S2 and the QR code icon S3 are shown in FIG. 5, in actual use, cross-region indicators of the same type are generally employed; that is, either an arrow icon or a two-dimensional icon is employed.

It should be understood that the RFID tag and the RFID reader may also be replaced with other types of tags and corresponding readers.

In summary, the present disclosure discloses a cross-region control method for an autonomous operation device, which includes the following steps:
determining, during operation of an autonomous operation device in a current working region, whether a cross-region condition is satisfied;
if the cross-region condition is satisfied, controlling the autonomous operation device to search for a pre-arranged cross-region indicator in the current working region; and
after the autonomous operation device finds the cross-region indicator, controlling the autonomous operation device to travel in a straight line along a traveling direction indicated by the cross-region indicator until the autonomous operation device enters a target working region, where the current working region is spaced apart from the target working region by a non-working region.

In the present disclosure, between traveling out of the current region and entering the target region, the autonomous operation device only undergoes straight-line traveling control without monitoring and adjusting the traveling direction, which greatly reduces the computing power required by its control system, thereby eliminating the need for expensive chips and lowering the device cost. Meanwhile, through the cross-region control method, the autonomous operation device can accurately complete the cross-region operation, thereby greatly improving the applicability.

In addition, the present disclosure further discloses an autonomous operation device, which is specifically an intelligent robotic mower. The autonomous operation device includes a processor and a memory. The memory stores a computer program executable on the processor. The processor, when executing the computer program, can implement a step of the cross-region control method for an autonomous operation device as described above. Preferably, a control module of the autonomous operation device is configured to include a memory storing the computer program and a processor capable of executing the computer program.

Exemplarily, the computer program may be divided into one or more modules/units, and the one or more modules/units are stored in the memory and executed by the processor to complete the method according to the present disclosure. The one or more modules/units may be a series of computer program instruction segments capable of completing specific functions, and the instruction segments are used to describe the execution process of the computer program in the autonomous operation device.

The autonomous operation device may include, but is not limited to, a processor and a memory. For example, the autonomous operation device may further include an input/output device, a network access device, a bus, and the like.

The processor may be a central processing unit (CPU), or may be another general-purpose processor, a digital signal processor (DSP), an application specific integrated circuit (ASIC), a field-programmable gate array (FPGA) or another programmable logic device, a discrete gate or a transistor logic device, a discrete hardware component, or the like. The general-purpose processor may be a microprocessor, or the processor may be any conventional processor or the like. The processor is a control center of the autonomous operation device, and connects all parts of the entire autonomous operation device by using various interfaces and lines.

The memory may be configured to store a computer program and/or a module. The processor runs or executes the computer program and/or the module stored in the memory, and invokes data stored in the memory, to implement various functions of the autonomous operation device, such as traveling, positioning, mowing, returning for charging, and cross-region operation. The memory may mainly include a program storage area and a data storage area. The program storage area may store an operating system, an application program required for at least one function (such as an audio playback function and an image playback function), and the like. The data storage area may store data created based on use of the mobile phone (such as audio data and a phonebook), and the like. In addition, the memory may include a high-speed random access memory, and may further include a non-volatile memory, such as a hard disk, a storage memory, a removable hard disk, a smart media card (SMC), a secure digital (SD) card, a flash card, at least one disk storage device, a flash memory device, or another volatile solid-state storage device.

The preferred embodiments of the present disclosure have been described in detail above, but it should be understood that various changes or modifications of the present disclosure can be made by those skilled in the art after reading the above teachings of the present disclosure. Such equivalents also fall within the scope of the appended claims of the present disclosure.

## Claims

1. A cross-region control method for an autonomous operation device, comprising:
determining, during operation of an autonomous operation device in a current working region, whether a cross-region condition is satisfied;
if the cross-region condition is satisfied, controlling the autonomous operation device to search for a pre-arranged cross-region indicator in the current working region; and
after the autonomous operation device finds the cross-region indicator, controlling the autonomous operation device to travel in a straight line along a traveling direction indicated by the cross-region indicator until the autonomous operation device enters a target working region, wherein the current working region is spaced apart from the target working region by a non-working region.

2. The cross-region control method according to claim 1, wherein the step of controlling the autonomous operation device to travel in a straight line along the traveling direction indicated by the cross-region indicator until the autonomous operation device enters the target working region comprises:
adjusting, according to the traveling direction indicated by the cross-region indicator, a traveling direction of the autonomous operation device to be consistent with the traveling direction indicated by the cross-region indicator; and
controlling the autonomous operation device to travel in a straight line until a boundary of the target working region is detected, and enter the target working region.

3. The cross-region control method according to claim 2, wherein the step of adjusting, according to the traveling direction indicated by the cross-region indicator, the traveling direction of the autonomous operation device to be consistent with the traveling direction indicated by the cross-region indicator comprises:
adjusting the traveling direction of the autonomous operation device to a reference direction; and
then adjusting the traveling direction of the autonomous operation device from the reference direction to the traveling direction indicated by the cross-region indicator.

4. The cross-region control method according to claim 3, wherein the reference direction is a geomagnetic north-south direction or a direction, at the cross-region indicator, perpendicular to a boundary and pointing away from the current working region.

5. The cross-region control method according to claim 1, further comprising: in the process of searching for the cross-region indicator in the current working region, controlling the autonomous operation device to search for a boundary of the current working region and then travel along the boundary.

6. The cross-region control method according to claim 5, wherein the step of controlling the autonomous operation device to travel in a straight line along the traveling direction indicated by the cross-region indicator until the autonomous operation device enters the target working region specifically comprises: controlling the autonomous operation device to rotate by a fixed angle at the cross-region indicator and then travel in a straight line away from the current working region until the autonomous operation device enters the target working region.

7. The cross-region control method according to claim 5, wherein the boundary is a visual boundary line between the working region and the non-working region and is recognizable by a camera mounted on the autonomous operation device, or the boundary is a boundary defined by a closed electrified wire in an enclosing manner and is recognizable by an inductor coil mounted on the autonomous operation device.

8. The cross-region control method according to claim 1, further comprising: in the process of the autonomous operation device entering the target working region from the current working region, controlling the autonomous operation device to travel in a straight line toward a pre-arranged cross-region indicator in the non-working region and then travel in a straight line along a traveling direction indicated by the pre-arranged cross-region indicator in the non-working region.

9. The cross-region control method according to claim 1, further comprising: in the process of searching for the cross-region indicator in the current working region, keeping the autonomous operation device working.

10. The cross-region control method according to claim 1, wherein when a working duration of the autonomous operation device in the current working region reaches a preset duration value or when the autonomous operation device reaches a set cross-region working time in the current working region, it is determined that the cross-region condition is satisfied.

11. The cross-region control method according to claim 1, wherein the cross-region indicator is a signal transmitter, a signal receiver is mounted on the autonomous operation device, and the cross-region indicator is found by the signal receiver through searching for a signal of the signal transmitter.

12. The cross-region control method according to claim 11, wherein the signal transmitter is an RFID tag, and the signal receiver is an RFID reader.

13. The cross-region control method according to claim 12, further comprising:
determining, based on a signal strength received by the RFID reader, whether the autonomous operation device reaches a position where the RFID tag is located.

14. The cross-region control method according to claim 1, wherein the cross-region indicator is an image marker, and the cross-region indicator is found by a camera mounted on the autonomous operation device through recognizing the image marker.

15. The cross-region control method according to claim 14, wherein the image marker comprises an arrow icon and a QR code icon.

16. An autonomous operation device, comprising a processor and a memory, the memory storing a computer program executable on the processor, wherein the processor, when executing the computer program, implements a step of the cross-region control method for an autonomous operation device according to any one of claims 1 to 15.

17. The autonomous operation device according to claim 16, wherein the autonomous operation device is a robotic mower.
